# EUROPEAN PATENT APPLICATION

(11) **EP 1 120 965 A1**
(43) Date of publication of application: **01.08.2001**
(21) Application number: 00101780.5
(22) Date of filing: 28.01.2000
(51) Int. Cl.: H04N 7/173, H04H 1/00, H04H 1/04

(54) **Method and system for delivering a desired audio and/or video sequence**

(71) Applicant: Woebcken, Carl L., Dr., 82031 Grünwald (DE)
(72) Inventor: Woebcken, Carl L., Dr., 82031 Grünwald (DE)
(74) Representative: Grünecker, Kinkeldey, Stockmair & Schwanhäusser Anwaltssozietät

(57) **Abstract**

The present invention provides a cost efficient method and system for delivering a desired audio and/or video sequence to a user. On a transmitting site, a plurality of sequences is stored on a server and these sequences are broadcast sequentially and in a cyclical manner to a plurality of receiving sites. Each user on a receiving site may select a desired audio and/or video sequence from the received sequence by means of a unique identifier.

## Description

The present invention relates to a method and a system for delivering a desired audio and/or video sequence among a plurality of available audio and/or video sequences to a user.

With the rising popularity of the Internet and the increasing efficiency of audio coders and decoders, an easy exchange of sound data via Internet became possible. Each PC equipped with a sound card may reproduce sound data stored on an internal memory device. Today, a plurality of Internet sites offer download of sound files to personal computers. Such a service is generally called "Music-on-Demand" or "Audio-on-Demand".

The rising popularity of "Music-on-Demand" services is mainly based on the efficiency of today's audio codecs (standard expression for coder/decoder combinations). In particular, the audio coding standard MP3 has made such widespread use of music files possible. MP3 represents a standardized compression scheme for audio data and the term "MP3" is the common abbreviation for Motion Picture Experts Group (MPEG) Audio Layer-3.

Without data reduction, digital audio signals typically consist of 16 bit samples recorded at a sampling rate of more than twice the actual audio bandwidth (e.g. 44.1 KHz for compact discs). Such a data representation results in more than 1,400 Mbit to represent just one second of serial music in CD quality. The use of MPEG audio coding provides a reduction of the original sound data of CD quality by a factor of 12, without losing sound quality. Such a data reduction is realized by perceptual coding techniques addressing the human perception of sound waves. MPEG Audio Layer-3 is defined within the audio part of two existing international standards, namely IS 11172-3 and IS 13818-3.

The audio part of MPEG describes the compression of audio signals using high-performance perceptual coding schemes. It specifies a family of three audio coding schemes, simply called Layer-1, Layer-2 and Layer-3. From Layer-1 to Layer-3, encoding complexity and performance (sound quality per bitrate) are increasing. The three codecs are compatible in a hierarchical way, e.g. a Layer-3 decoder may accept Layer-1, -2 or -3, whereas a Layer-2 decoder may only accept Layer-1 and -2.

For each layer, the standard specifies the bit stream format and the decoder. To allow for further improvements, it does not specify the encoder, but an informative chapter gives an example for an encoder for each layer.

All layers use the same basic structure. The coding scheme can be described as "perceptual noise shaping" or "perceptual sub-band / transform coding". The encoder analyzes the spectral components of the audio signal by calculating a filter bank "transform" and applies a psycho-acoustic model to estimate the just noticeable noise-level. In its quantization and coding stage, the encoder tries to allocate the available number of data bits in a way to meet both the bit rate and masking requirements. But the decoder is much less complex. Its only task is to synthesize an audio signal out of the coded spectral components.

Layer-1 has been designed mainly for the DCC (Digital Compact Cassette), where it is used at 384 kbit/s. Layer-2 has been designed as a trade-off between complexity and performance. It achieves a good sound quality at bit rates down to 192 kbit/s. Layer-3 achieves CD sound quality appropriate for broadcast applications at bitrates of 60 kbit/s per audio channel, i.e. about 120 kbit/s for a stereo signal. A sound quality similar to FM radio may be achieved with a reduction ratio of already 25:1.

The next phase of compression work of the International Standardization Organization (ISO) is called MPEG-4. The MPEG-4 format is meant to become the universal language between broadcasting, movie and multimedia applications. While the former MPEG standards were only concerned with compression, MPEG-4 will provide additional functionality (e.g. bit rate scalability, object-base representation) and is based on a tool set starting at bit rates as low as 2 kbit/s for a channel. The core part of the MPEG audio coder is based on the standardized MPEG technology including a number of additional coding tools. In this way further enhancement in coding performance is achieved.

The convincing advantages of the MP3 format are to provide a high quality by a small amount of data. MP3 sound files are available at a plurality of Internet addresses. In order to find a desired music, Internet search engines have to be used. The download of MP3 files require a modem, preferably an ISDN-modem in order to achieve acceptable download times.

Listening to MP3 files is only possible when using a MP3 decoder. Software-players are available as shareware in the Internet and are sometimes already part of a disk operating system.

However, the download itself is still cumbersome, especially due to the low transmission rates of the Internet. A download of MP3 files of high quality may take longer than a real-time reproduction of such music.

Moreover, complex hardware is necessary for enabling a "Music-on-Demand" service. The user has to make a request sent to the provider. The provider will transmit the selected sound data via the same transmission line to the user in the reverse direction. The use of bi-directional transmission lines reduces the overall transmission rate in both directions. In particular, the use of telephone lines limits the maximum amount of data being transmitted to each user.

In addition, each provider may only serve one request at a time. A huge number of demands cannot be handled simultaneously.

Further, sound files are provided via Internet on a worldwide basis. The Internet as transmission medium does not allow to take copyright protection or trademark limitations into account. The data offered for download are provided in the same shape and configuration to all Internet users. In general, no specific authorization is necessary for access to the Internet.

Due to the rising popularity of the Internet, it becomes increasingly interesting to sell digitized and compressed data to interested customers over the Internet. Unfortunately, there are not yet generally accepted modes to invoice customers being a indispensable requirement for commercial use.

A recent development relates to so-called Internet-push-services allowing an Internet user to receive customized information from an Internet content provider. Technically such services rely on a client to initiate the updates from the content provider's server--which is basically more a client "pull" than a server "push".

It is an object of the present invention to provide a cost efficient method and system for delivering a desired audio and/or video sequence to a user.

This object is solved by the teachings of claims 1, 2 and 12.

Preferred embodiments are the subject matter of the dependent claims.

According to the present invention, a transmitting site stores a plurality of audio and/or video sequences on a server. These sequences are sequentially and in a cyclical manner broadcasted to a plurality of receiving sites. For this purpose, the transmitter either uses a broadband satellite or cable channel. The transmission of the plurality of sequences is repeated in a cyclical manner. Either the cable network or the satellite transmits these sequences to a plurality of receiving sites. Each user on a receiving site may select a desired audio and/or video sequence. Each transmitted sequence is associated by a unique identifier. A selection of a desired sequence includes a selection of a unique identifier that has been assigned to said audio and/or video sequence.

The transmitted sequences are received via satellite receivers or cable receivers. The received data are forwarded to a processing device, in particular a personal computer. The computer is monitoring the received data in order to detect the selected identifier. Upon detection of said identifier, the desired sequence is extracted from the received signals and stored in a memory.

Such a teaching allows to broadcast a huge number of sequences to a plurality of users. Each user does not need to send a request, but only to monitor the received sequence data. By using broadband transmission channels, the time required for the transmission of each sequence is considerably reduced, e.g. in the range of seconds for a music sequence.

When sequentially transmitting different audio sequences for a few hours, thousands of different music sequences may be transmitted within this time limit. It is thus possible to broadcast a complete library of music songs within a few hours, each song being broadcast within some seconds or even below one second. This becomes possible as the invention also suggests to use a very broad band for the broadcasting of the sequences, the bandwidth of which being much broader than that ordinarily used for transmitting such kind of information.

In a typical embodiment a full television channel of several MHz would be used making clear that this allows transmission of an MP3 file of one or several Mbit in the range of seconds. The transmission of the audio or video sequences is performed in a sequential manner, meaning that no other content (except identifier information) is transmitted via the respective channel in between two particular sequences.

Thus the present invention greatly departs from prior art systems using a vertical blanking period (VBP) for broadcasting of for example teletext-information. It constitutes a fundamental principle of the present invention to reserve a complete channel for the uninterrupted sequential transmission, i.e. broadcasting, of audio/video sequences.

Another fundamental aspect of the invention resides in the repeated i.e. cyclical transmission of all available sequences as for example a library of music files.

Preferably the broadcasting is done during night when the respective channel capacity would be unused otherwise.

The present invention further greatly departs from conventional Internet solutions as broadcasting is used to reach a great number of customers simultaneously instead of having point-to-point communication with individual Internet users.

Nevertheless, the use of satellite or cable broadcast allows to limit the range of possible customers according to geographical criteria and thus it is possible to take into account copyright, trademark, license and language particulars of a certain region.

In the following, preferred embodiments of the present invention are described in conjunction with the accompanying drawings, which show:
FIG. 1, a simplified diagram of a delivering system for audio and/or video sequences according to the present invention, and
FIG. 2, an illustrative diagram of the structure of the transmitted sequences with respect to time.

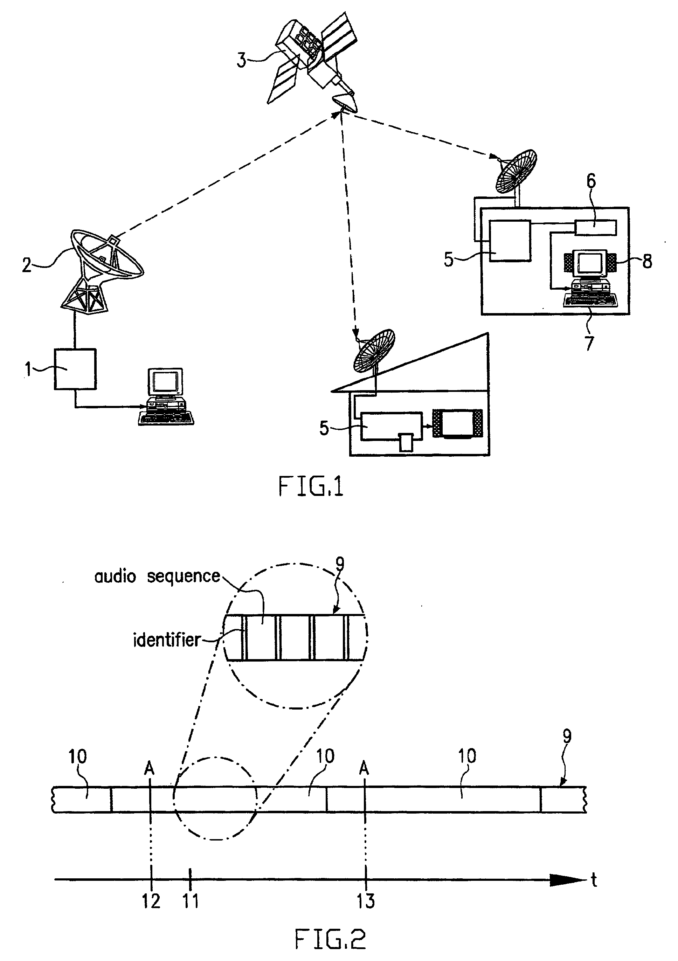

According to the present invention, desired audio and/or video sequences are transmitted to an individual user by broadcasting a plurality of sequences in a cyclical manner. The term audio or video sequences includes but is not limited to music songs, music files, video films and video files. Each user may extract his desired sequence by using an individual identifier for the desired sequence. An example of a preferred embodiment of the present invention is shown in FIG. 1.

The plurality of audio sequences is provided by an audio server 1. Preferably, the audio sequences are stored in highly compressed electronic or optical form on a recording medium, e.g. hard disk drives or CD / DVD disks The audio server is connected to an uplink unit 2. The audio sequences to be transmitted are supplied to the uplink unit 2 in a predetermined order. The uplink unit 2 transmits the audio sequences to a transponder of a satellite 3. The satellite 3 receives the data and distributes same to a plurality of receiving sites. The signal beam transmitted from satellite 3 results in a "footprint" which represents the area of possible users on the Earth's surface. Preferably, such a satellite 3 is located at a geostationary position. Such satellites are operated by various European satellite operators including ASTRA, Eutelsat and Hispasat.

A high-speed data transfer is not limited to satellite channels, but is also possible by cable and terrestrial television channels. When using television channels for audio sequences, the transmission efficiency of audio data is considerably increased. A standard 6.7 or 8 MHz TV channel may offer a data throughput between 6 Mbit/s and 38 Mbit/s depending on whether only a part of the channel or the complete channel or transponder is used. Such a high-speed data transfer enables to deliver several audio sequences within seconds.

The satellite 3 broadcasts the received data to a plurality of receiving sites located within said footprint area. Alternatively, a broadband cable network may deliver these data to a plurality of users connected thereto.

Each receiving site, either having a satellite dish or being connected to said cable network will receive the distributed sequences. The sequences are transmitted in a sequential manner. A unique identifier is assigned to each of all sequences. The assigning of identifiers to the sequences has to be carried out correspondingly on the transmitting side and on the receiving side. In a preferred embodiment, each audio sequence is transmitted associated with a unique identifier. Alternatively, the identifiers are only provided on each side and assigned to the transmitted sequences according to a predetermined rule.

An example of data transmitted via satellite to each receiver is depicted in FIG. 2. The stream of transmitted data is labelled by reference numeral 9 in FIG. 2. As shown on top of FIG. 2, the stream of transmitted data alternately comprises audio sequences and the corresponding identifiers. The top portion of FIG. 2 representing an enlarged detail of the transmitted data stream as shown in the mid-portion. As can be seen from FIG. 2, the plurality of transmitted audio sequences 10 is repeatedly transmitted in a cyclic manner. According to a preferred embodiment of the present invention, the audio data are transmitted via television channels using the total transmission capacity of a TV channel, preferably which are employed for TV services at daytime. In order to efficiently make use of the provided channel capacity, audio sequences are transmitted at night when a transmission of television programs would not be sufficiently profitable.

The transmitted signals distributed by said satellite 3 are received at each receiving site by means of satellite receivers 5. The received signals are subsequently supplied to a processing unit 6, preferably a personal computer. The personal computer comprises an input unit 7 and loudspeaker 8.

When a user intends to "download" a desired audio sequence, a selection is carried out by means of the input unit 7 or by typing a particular code. The selection procedure may be supported by appropriate selection masks on a display of the input unit or the personal computer.

The processing unit receives the selected identifier and the received audio sequences. In order to be able to process the audio sequences, such a personal computer preferably comprises a TV-card or a similar module able to process the received data.

The personal computer monitors the received signals in order to detect the selected identifier. Upon detecting the selected identifier within the received signals, the corresponding audio sequence is extracted from the received signals and stored on a storing medium within said processing module or personal computer.

FIG. 2 illustrates the "download" procedure according to the present invention with respect to time. For that purpose, the bottom line labelled "t" indicates the lapse of time. Assuming, a user wishes to receive a particular audio sequence called "A". This audio sequence A is transmitted at a certain position within the transmission period of each cycle. At a point of time 11, the user selects the desired audio file. However, the desired audio file has already been transmitted at a point of time 12 just before the user requested to receive audio sequence A. The next transmission takes place at a point of time 13. After having selected the desired audio sequence A at time 11, the personal computer monitors the incoming signals for detection of the selected identifier. When the desired sequence A is next transmitted at time 13, the particular identifier is detected and , in response, the corresponding audio sequence is extracted from the received signals.

The satellite receiver (or cable receiver) supplies the received data to a personal computer. Alternatively, the satellite receiver may be part of a set-top box especially designed to extract audio sequences from the received signals. Preferably, such a set-top box is part of a generally known set-top box 5 for television receivers as shown in the lower right side of FIG. 1. Such a set-top box either being able to receive television signals to be displayed on a television screen and to extract audio sequences upon a user's selection.

The circuits necessary for performing the present invention may be provided within a module or a particular circuit card which is incorporated into either a personal computer, a television receiver/display device or a set-top box.

In order to allow a commercial use of the described transmission procedure, each receiver has to be charged for "downloading" audio sequences. When using television channels for the audio sequence transmission, well known Conditional Access schemes may be employed. At the user end, Conditional Access components may additionally be built into a TV-card or module, allowing the broadcaster to track and charge for the data that each user receives. Alternatively, all data may be transmitted in a scrambled manner. Each subscriber at the user end may receive a particular code in order to be able to descramble the received signals. Preferably, each user will only be charged for each descrambled audio sequence.

The present invention is not limited to audio sequences. Instead of audio sequences, video sequences or a mixed transmission of audio and video sequences may be performed.

The wide area coverage offered by a single satellite footprint ensures that millions of users can receive the transmitted audio files by just one transmission. Since the required infrastructure, i.e. the broadband television channels via satellite or cable, are already in effect, very little additional investment is needed from both broadcasters and users to take advantage of the present invention. With possible bit rates of more than 30 Mbit/s per transponder, the amount of data stored on a conventional compact disc may be distributed to users within minutes.

## Claims

1. A method of delivering a desired audio and/or video sequence among a plurality of available audio and/or video sequences to a user, said method comprising the steps of:
storing said plurality of available audio and/or video sequences in highly compressed electronic or optical form on a server site and assigning a unique identifier to each of said audio and/or video sequences,
selecting a desired audio and/or video sequence at a remote user site including a selection of a unique identifier that has been assigned to said desired audio and/or video sequence,
connecting the user site to a satellite-receiver and monitoring signals received by that satellite-receiver,
sequentially and in a cyclical manner broadcasting via satellite said plurality of available audio and/or video sequences stored in highly compressed electronic or optical form on said server site together with their respective unique identifiers,
upon detection by the user site of a unique identifier within the signals received by the satellite-receiver that corresponds to the selected unique identifier, extracting from the received signals that audio and/or video sequence that corresponds to said unique identifier, and
storing the extracted audio and/or video sequence at the remote site.

2. A method of delivering a desired audio and/or video sequence among a plurality of available audio and/or video sequences to a user, said method comprising the steps of:
storing said plurality of available audio and/or video sequences in highly compressed electronic or optical form on a server site and assigning a unique identifier to each of said audio and/or video sequences,
selecting a desired audio and/or video sequence at a remote user site including a selection of a unique identifier that has been assigned to said desired audio and/or video sequence,
connecting the user site to a broadband cable-receiver that is connected to a broadband cable network and monitoring signals received by said broadband cable-receiver,
sequentially and in a cyclical manner broadcasting via said broadband cable network said plurality of available audio and/or video sequences stored in highly compressed electronic or optical form on said server site together with their respective unique identifiers,
upon detection by the user site of a unique identifier within the signals received by the broadband cable-receiver that corresponds to the selected unique identifier, extracting from the received signals that audio and/or video sequence that corresponds to said unique identifier, and
storing the extracted audio and/or video sequence at the remote site.

3. A method according to claim 1 or 2, wherein said audio sequences are compressed using MPEG audio coding.

4. A method according to claim 3, wherein said audio sequences are compressed using MP3 audio coding.

5. A method according to claim 1 or 2, wherein said video sequences are compressed using MPEG video coding, preferably MPEG-2 or MPEG-4 video coding.

6. A method according to one of claims 1 to 5, wherein said remote site comprises a personal computer including a TV-card.

7. A method according to claim 1, wherein said satellite transmission is made using a geostationary satellite, preferably a satellite operated by ASTRA or Eutelsat.

8. A method according to claim 1 or 7, wherein said satellite transmission is made using a television channel.

9. A method according to one of the preceding claims, wherein said audio and/or video sequences are broadcast in a scrambled manner and may be descrambled only by respectively authorized remote sites.

10. A method according to any of the preceding claims, wherein conditional access schemes similar to those known for pay-TV channels are employed.

11. A method according to one of the preceding claims wherein a payment procedure for the extracting of desired audio and/or video sequences is made through Internet-communication.

12. A system for delivering a desired audio and/or video sequence among a plurality of available audio and/or video sequences to a user, comprising:
a server unit (1) for storing said plurality of available audio and/or video sequences in highly compressed electronic or optical form wherein a unique identifier being assigned to each audio and/or video sequence,
a transmitter (2) connected to said server unit (1) for sequentially and in a cyclical manner broadcasting said plurality of available audio and/or video sequences stored in highly compressed electronic or optical form on said server unit (1) together with their respective unique identifiers,
a satellite (3) for receiving signals transmitted from said transmitter (2) and distributing these signals to a plurality of receiving sites,
each receiving site comprising:
an input device (7) for selecting a desired audio and/or video sequence including a selection of a unique identifier that has been assigned to said desired audio and/or video sequence,
a satellite-receiver (5) for receiving the signals transmitted from said satellite (3),
a processing device (6) being connected to said input device (7) and to said satellite-receiver (5) for monitoring the signals received by said satellite-receiver (5), for detecting a unique identifier within the signals received by the satellite-receiver (5) that corresponds to the selected unique identifier and for extracting from the received signals that audio and/or video sequence that corresponds to said unique identifier, and
a memory device for storing the extracted audio and/or video sequence at the receiving site.

13. A system according to claim 12, wherein said processing device (5) being a PC and the additional functionality being provided by a TV-card being incorporated into said PC.
